# EUROPÄISCHE PATENTANMELDUNG

(11) **EP 2 341 499 A1**
(43) Veröffentlichungstag der Anmeldung: **06.07.2011**
(21) Anmeldenummer: 10156026.6
(22) Anmeldetag: 10.03.2010
(51) Int. Cl.: G10K 11/172, F16L 55/033, F16L 13/00

(54) **Kammer-Resonator und Verfahren zu seiner Herstellung**

(30) Priorität: 18.12.2009 DE 102009058843
(71) Anmelder: ELB-Form GmbH, 6773 Vandans (AT)
(72) Erfinder: Schallert, Erwin, 6710, Nenzing (AT); Vierhauser, Alexander, 6714, Nüziders (AT); Dolibasic, Marin, 6800, Feldkirch (AT)
(74) Vertreter: Neidl-Stippler, Cornelia

(57) **Zusammenfassung**

Die Erfindung betrifft einen Kammerresonator zur Dämpfung von Geräuschen in einer Rohrleitung (2), mit mindestens einer um die Rohrleitung (2) verlaufenden Kammer (10), die über mindestens eine Verbindungsöffnung (11, 22) zwischen Rohrleitungsinnerem und Kammer (10) zum Druckausgleich dazwischen mit dem Rohrleitungsinneren verbunden ist; wobei die mindestens eine Kammer (10) gebildet ist durch den umgeformten Endabschnitt des ersten Rohrs (4) mit flanschartiger Erhebung (8) und einen in der Länge der Kammer(n) (10) aufgeweiteten Endabschnitt des zweiten Rohrs (5); wobei die mindestens eine flanschartige Erhebung (8) mindestens Kammerhöhe hat und der aufgeweitete Endabschnitt des zweiten Rohrs (5) einen Durchmesser entsprechend der Summe aus Rohrdurchmesser und Kammerhöhe besitzt, wobei die ineinandergeschobenen Endabschnitte des ersten und zweiten Rohrs (4,5) an ihren Berührungsstellen verbunden sind und mindestens eine Öffnung (11) im ersten Rohr (4) im Bereich der Kammer (10) zur Kommunikation mit dem Rohrinneren besteht. Sowie ein Verfahren zu seiner Herstellung

## Beschreibung

Die Erfindung betrifft einen Kammer-Resonator zur Dämpfung von Geräuschen und Einzeltönen in Rohrleitungen sowie ein Verfahren zu seiner Herstellung.

Rohrleitungen im Sinne der vorliegenden Erfindung sind ummantelte Räume mit gegenüber ihrer Längsabmessung kleinen Querabmessungen (Lüftungskanäle, Abgasrohre, Kamine etc.).

Es sind beispielsweise aus Schmidt, Helmut: Schalltechnisches Taschenbuch; 4. Auflage, Düsseldorf, 1989, verschiedene Resonatortypen zur Schalldämpfung in Rohrleitungen und Kanälen bekannt. Für die praktische Anwendung kommen zwei prinzipielle Ausführungsformen in Frage, die entweder auf Abzweigungen an oder von Querschnittsveränderungen in der Rohrleitung beruhen. Ein gebräuchlicher Resonatortyp ist z.B. der Helmholtz-Resonator, der im Prinzip aus einem Hohlraum besteht, der in der Regel durch eine oder mehrere Öffnungen mit der zu dämpfenden Leitung verbunden ist. Die Öffnungen sind dabei gleichmässig bzw. symmetrisch über die gemeinsame Fläche zwischen Kammer und Rohrleitung verteilt. Nachteilig ist, dass die Dämpfungswirkung eines Helmholtz-Resonators weitgehend auf den Bereich um eine einzige Frequenz, der Resonanzfrequenz des Systems, beschränkt bleibt. In den restlichen Frequenzbereichen liegt eine wesentlich geringere Pegelminderung vor.

Ein abgewandelter Vertreter dieses Resonatortyps ist der sogenannte Lochresonator. Er besteht im wesentlichen aus einem Hohlraum, der durch eine perforierte Platte mit einem gewissen Lochflächenanteil vom zu bedämpfenden Raum getrennt ist.

Bekannt ist ferner der sogenannte Pfeifenresonator. Die Wirkungsweise eines Pfeifenresonators beruht auf Interferenzen zwischen der ankommenden Schallwelle in der Rohrleitung und einer reflektierten Schallwelle. Die Reflexion tritt beispielsweise in an die Rohrleitung angekoppelten Rohrstücken oder an Räumen mit gegenüber der Rohrleitung grossen Querschnittsänderungen auf, in die die Rohrleitung noch hineinragt. Die dämpfende Wirkung der Interferenzerscheinungen ist dabei abhängig von der Länge der angekoppelten Rohrleitung bzw. der Länge, mit der die Rohrleitung noch in den Raum mit vergrössertem Querschnitt hineinragt. Die maximale Dämpfung eines solchen Pfeifenresonators liegt bei einer Wellenlänge, die dem Vierfachen der Länge des angekoppelten Rohres bzw. des hineinragenden Teiles der Rohrleitung entspricht ( lambda /4-Pfeife).Weitere Dämpfungsbereiche liegen bei dem ungeradzahligen Vielfachen von dem so gegebenen lambda /4. lambda stellt dabei die Wellenlänge der Schallwelle im Ausbreitungsmedium in der Rohrleitung dar.

Zum genauen Festlegen der Länge 1/4 lambda muss berücksichtigt werden, dass sich die physikalische Rohrlänge für die Luftschwingung um eine gewisse Strecke verlängert. Daher wird die physische Rohrlänge eines solchen Pfeifenresonators um eine Mündungskorrektur verkürzt.

Das Prinzip von Einkammer-Resonatoren ist in der DE 29 30 668 A1 beschrieben, wobei auf diese Dokumente zur Vermeidung von Wiederholungen in vollem Umfang bezug genommen wird.

Die bekannten Resonatoren waren in ihrer Herstellung aufwendig, führten zu unbrauchbaren Materialresten und benötigten verschiedenste Einzelkomponenten, wie Befestiger.

Es ist daher Aufgabe der Erfindung, einen schalldämpfenden Resonator für Rohrleitungen zu entwickeln, der einfacher hergestellt werden kann.

Die Aufgabe wird erfindungsgemäß durch einen Resonator mit den Merkmalen des Patentanspruches 1 gelöst. Ein vorteilhaftes Verfahren zu seiner Herstellung ergibt sich aus dem Patentanspruch 9. Vorteilhafte Weiterbildungen ergeben sich aus den abhängigen Ansprüchen.

Dadurch, dass die für die Dämpfung angeschlossene, die Rohrleitung umgebende Kammern aus den Rohrabschnitten eines Leitungsabschnitts selbst hergestellt sind, können Komponenten eingespart, Materialabfall vermieden und Verfahrensschritte, die bei bekannten Herstellungsverfahren notwendig waren, entfallen.

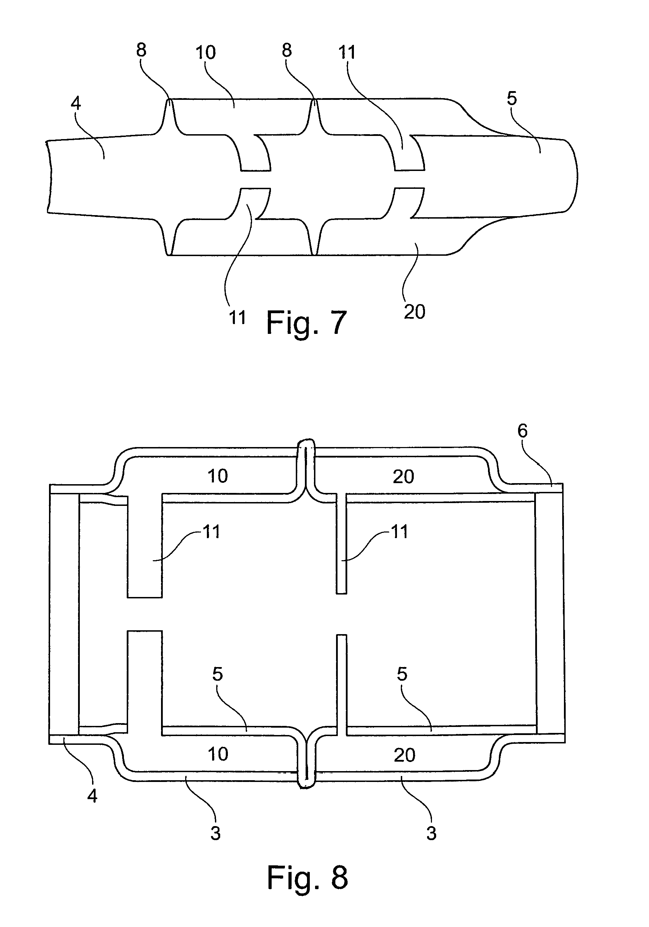

Dabei hat eines der Rohre, bspw. das erste Rohr, eine flanschartige Erhebung in Enfernung einer Kammerlänge vom Rohrende zur Ausbildung der Begrenzung der Kammer. Für eine weitere Kammer wird eine weitere flanschartige Erhebung im ersten Rohr ausgebildet, wobei deren Lage von den erwünschten Abmessungen der weiteren Kammer abhängen, wie aus Fig. 7 ersichtlich.

Es kann günstig sein, daß das erste und zweite Rohr aus gleichem Material bestehen. Dann, wenn beide aus dem gleichen Material bestehen, können Recycling-Probleme umgangen werden wie auch Probleme, die durch verschiedene Ausdehnungskoeffizienten verschiedener Metalle entstehen könnten.

Es ist aber auch möglich, daß das erste und zweite Rohr aus unterschiedlichem Material bestehen - insbesondere, wenn an einen der beiden Rohrabschnitte andere Anforderungen hinsichtlich Temperaturresistenz, mechanische Stabilität etc. gestellt sind.

Die jeweilige flanschartige Erhebung ist am zweiten Rohr dichtend befestigt, um so die Kammer zu bilden.

Ebenso ist das Rohrende des ersten Rohrabschnitts mittels eines an sich bekannten Befestigungsverfahrens am Ende des erweiterten Bereich des zweiten Rohrabschnitts befestigt.

Als Befestigungsverfahren bietet sich bspw. ein solches ausgewählt aus der Gruppe: Schweißstellen, Lötstellen, Schrauben, Nieten, Falzen.

Als Kommunikationsöffnung zwischen Kammer und Rohrinnerem kann bspw. die mindestens eine Öffnung ein Schlitz im jeweiligen Abschnitt des ersten Rohres, der innerhalb der Kammer liegt, sein.

Ein typisches Material für einen Resonator ist zumindest teilweise aus Metall, wie Aluminiumblech, Stahlblech u. dgl. Für spezielle Anwendungen können aber auch Kunststoff oder Kombinationen von Kunststoff und Metall oder aber Verbundmaterialien eingesetzt werden, je nach Einsatz. So können Schalldämpfer durch dem Fachmann geläufige Materialwahl so ausgelegt werden, dass sie auch in Rohrleitungen, durch die z.T. auch mit korrosiven Stoffen verunreinigte Gasgernische geleitet werden, hohe Standzeiten besitzen.

Ein erfindungsgemäßer Kammerresonator ist herstellbar durch:
Aufweiten eines Rohrendenbereichs - bspw. durch mechanisches Aufweiten oder aber Innenhochdruckformen eines aufgeweiteten Rohrbereichs an einem Rohr mit einem Durchmesser entsprechend der Summe aus der doppelten Kammerhöhe und dem Rohrdurchmesser und ähnliche, dem Fachmann geläufige Verfahren;
Trennen des aufgeweiteten Rohrbereichs des Rohrs unter Herstellung aufgeweiteter Rohrenden;
Herstellen mindestens einer flanschartigen Erhebung in Kammerhöhe und in einer der Kammerlänge entsprechenden Distanz vom Ende eines ersten Rohrs mit Rohrleitungsdurchmesser durch ein an sich bekanntes Verfahren;
Herstellen mindestens einer Kommunikationsöffnung am Endabschnitt des ersten Rohrs im Bereich der Kammer;
Zusammenschieben der Rohrenden, wobei das zweite Rohr die Resonatoraußenwand und das erste Rohr die Resonatorinnenwand liefert, und
Verbinden der Berührungsstellen beider Rohre.

Dadurch kann das bisher notwendige Vorsehen von Einzelteilen, wie Befestigern, aufwendigen Zwischenblechen etc. zur Verbindung derartiger an- und abführender Rohrenden vermieden werden. Durch das IHU-Verfahren kann noch dazu das Anfallen von Abfall weitgehend vermieden werden.

Die mindestens eine flanschartige Erhebung kann bspw. durch Stauchen hergestellt werden - sie kann aber auch durch IHU erstellt werden.

Das Verbinden der beiden umgeformten Rohrabschnitte kann durch übliche Verfahren, wie sie dem Fachmann geläufig sind, erfolgen, wie Falzen, Schweißen, Löten, Schrauben, Nieten.

Dadurch, daß die Kammer des Resonators in einem erweiterten Bereich eines Rohrabschnitts eingesetzt und in diesem ohne Befestiger angebracht ist, ist es möglich, auch in gebogenen Leitungen beliebiger Länge derartige Resonatoren vorzusehen, ohne diese aufwendig in eine gebogene Rohrleitung beidseitig einschweissen zu müssen. Es können aber auch kurze rohrartige Anschlußstücke auf diese Art und Weise an den Resonator folgen.

Die baulichen Abmessungen des Resonators, wie die Länge der Kammer bzw. die Strecke, inwieweit der eine Rohrabschnitt in den ihn umgebenden erweiterten Rohrabschnitt hineinragt bzw. die Kammer begrenzt, bemisst sich im wesentlichen nach der Auslegung eines Resonators, wie dem Fachmann geläufig ist. Die Resonatoren wirken als Helmholtz-Resonatoren, somit lassen sich mit geeigneter Dimensionierung Resonanzfrequenzen festlegen, bei denen die Dämpfung wirkt. Eine geeignete Dimensionierung erschliesst sich dem Fachmann ohne weiteres.

Enthält das Gasgemisch in der zu dämpfenden Leitung keinen oder nur einen geringen Anteil an Schmutzpartikeln oder korrosiven Stoffen, so kann das Kammervolumen zur Schalldämmung auch mit geeignetem Material wie Stein-/Mineralwolie ganz oder teilweise gefüllt sein.

Im folgenden werden Ausführungsbeispiele erfindungsgemäßer Resonatoren anhand der Zeichnung beispielhaft erläutert. Dabei zeigen
Fig. 1 schematisch die Herstellung eines Einkammer-Resonators
Fig. 2 schematisch die Bestandteile eines Einkammer-Resonators
Fig. 3 eine perspektivische Darstellung eines geschnittenen erfindungsgemäßen Einkammer-Resonators ;
Fig. 4 eine perspektivische Darstellung eines ersten Rohrabschnitts;
Fig. 5 eine perspektivische Darstellung eines zweiten Rohrabschnitts;
Fig. 6 einen Einkammerresonator im Längsschnitt; und
Fig. 7 einen Mehrkammerresonator schematisch im Längsschnitt; und
Fig. 8 einen weiteren Mehrkammeresonator schematisch im Längsschnitt.

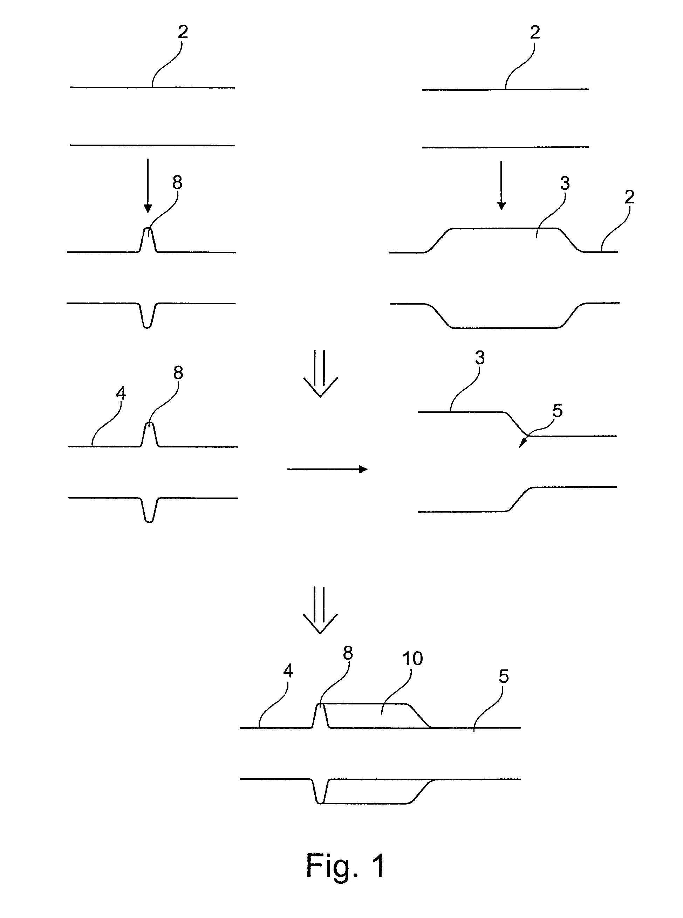

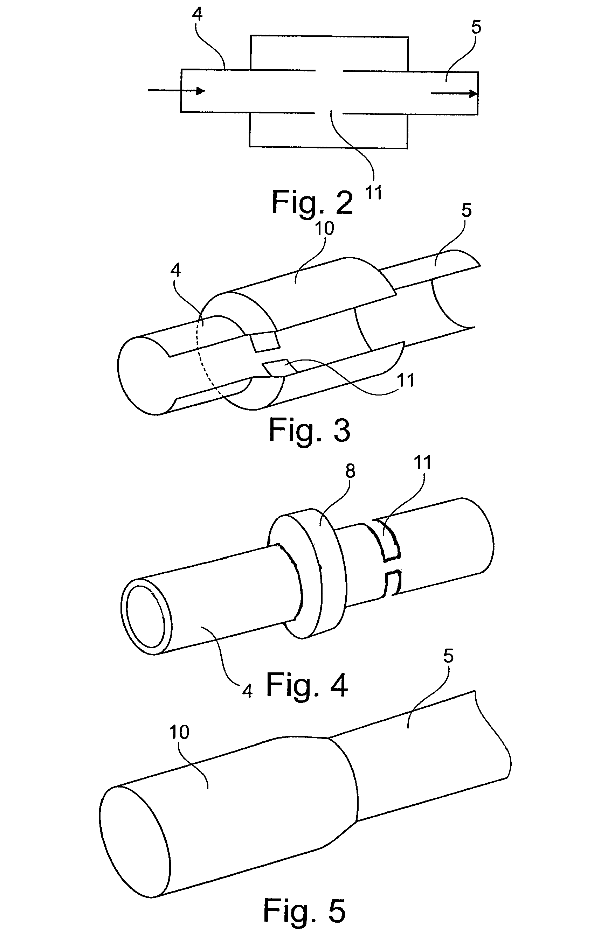

Der Einkammer-Resonator der Fig. 2 besteht aus einer Kammer 10 der Länge 1 mit einer Öffnung 11 um eine Rohrleitung 2. Dabei ist die Kammer durch einen erweiterten Endbereich des zweiten Rohrs 5 und den mit einem Umfangsflansch 8 versehenen Bereich des ersten Rohrs 4 begrenzt. In Fig. 1 ist schematisch eine mögliche Herstellung eines erfindungsgemäßen Resonators erläutert. Ein mit einer Aufweitung, deren Durchmesser der Summe des Rohrdurchmessers und des Kammerdurchmessers entspricht, versehener Rohrabschnitt wird im Bereich der Aufweitung 3 unter Herstellung eines zweiten Rohrs 5 mit erweitertem Endbereich getrennt, so dass die Länge des erweiterten Endbereichs in etwa der Resonatorkammerlänge entspricht. Ein erstes Rohr 4 wird durch ein an sich bekanntes Umformverfahren, bspw. Stauchen, mit einem Umfangsflansch 8 in einem Abstand vom Rohrende entsprechend der Kammerlänge l versehen. Es wird mindestens eine Kommunikationsöffnung 11 ― hier ein Schlitz ― im Kammerbereich des ersten Rohrs 4 zwischen Rohrende und dem Flansch 8 eingebracht.

Diese Herstellung einer Öffnung 11 kann durch an sich bekannte Trennverfahren erfolgen, ist aber auch durch eine geeignete Innenhochdruckumform-Form (IHU-Form) möglich. Das umgeformte Ende des ersten umgeformten Rohrs 4 wird in den aufgeweiteten Bereich 3 des zweiten Rohrs 5 eingeführt und an diesem befestigt. Dies kann bspw. Durch Schweißen oder Löten, aber auch durch Falzen erfolgen. Dadurch wird eine Kammer 10 um das Rohr 2 gebildet, die als Helmholzresonator wirkt.

Beim schematisch in Fig. 2 dargestellten Einkarnmer-Helrnholtz-Resonator ist es wesentlich, daß das Rohr 2, in dem sich eine stehende Welle ausbilden würde, falls kein Resonator vorgesehen ist, mit einem zweiten Volumen, dem Kammervolumen, in Verbindung steht. Dieses Volumen in der Kammer 10 hat eine andere Eigenfrequenz als das Rohr. Die Kammereigenfrequenz und die Rohrfrequenz löschen sich im Idealfall aus oder bilden zumindest ausreichende Interferenzen, um ein Aufschaukeln einer Resonanz in der Rohrleitung oder eine Resonanzkatastrophe zu verhindern.

In Fig. 3 ist ein teilweise geschnittener zusammengebauter Einkammerreaktor perspektivisch dargestellt. Deutlich ist die schlitzförmige Öffnung 11 im Endabschnitt des ersten Rohrs 4 in der Kammer 10 zu sehen, über die ein Druckaustausch zwischen Rohrleitung und umgebender Kammer 10 möglich ist.

In Fig. 4 ist der umgeformte Endabschnitt des ersten Rohrs 4 perspektivisch dargestellt. Die flanschartige Erhebung 8 ist in einer Entfernung entsprechend der Kammerlänge vom Rohrende ausgebildet. Zwischen der Erhebung 8 und dem Rohrende ist die Kommunikationsöffnung 11 fensterschlitzartig im ersten Rohr 4 ausgebildet.

Fig. 5 zeigt das zweite Rohr 5 mit dem erweiterten Bereich 3, welcher die Kammeraußenwand bildet.

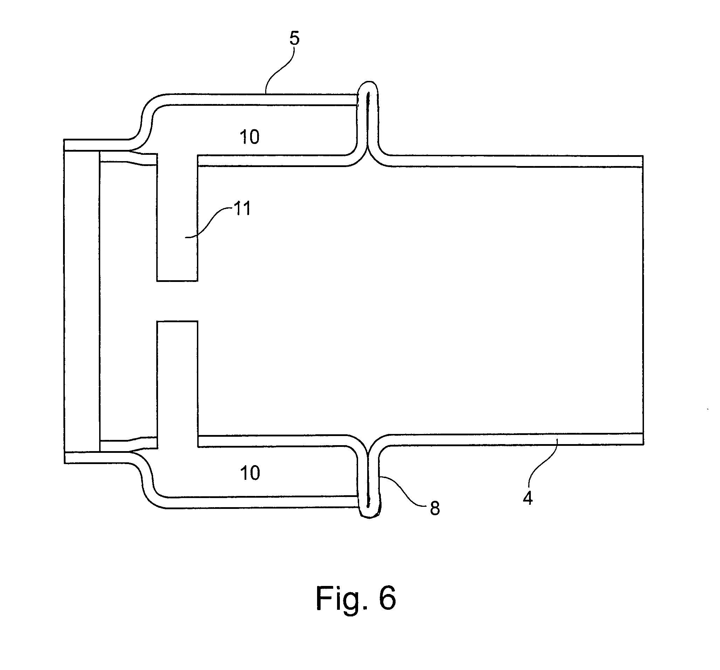

Fig. 6 zeigt schematisch den zusammengebauten Einkammerresonator im Längsschnitt.

Fig. 7 zeigt eine Ausführungsform, bei der das Rohr 4 zwei Erhebungen/Flansche 8 im Abstand einer Resonatorkammer aufweist. In den Rohrabschnitten, welche eine Kammerwand bilden, ist jeweils eine schlitzartige Verbindungsöffnung 11 vorgesehen, mit der Kommunikation mit der im Rohrinneren befindlichen Fluidsäule besteht.

Ein Zweikammerresonator kann aber auch, wie aus Fig. 8 ersichtlich, durch Vorlegen eines Einkammerresonators nach Fig. 6; Einbringen einer Verbindungsöffnung 11' in dem der ersten Kammer 10 benachbarten Rohrabschnitt des zweiten Rohres 5 und Überstülpen eines erweiterten Rohrabschnittes 3 entsprechend der Länge der zweiten Kammer 20 eines weiteren dritten Leitungsrohres 6 über das zweite Rohr 5 bis zum Flansch 8 unter Ausbildung einer zweiten Kammer 20, die mit dem Leitungsinneren durch die Öffnung 11' in Verbindung steht. Die jeweiligen Enden des zweiten Rohrs 5 sind an dem ersten Rohr 4 und dem dritten Rohr 6 befestigt. So wird ein stabiler Zweikammerresonator ausgebildet.

Bei Druckbeaufschlagung der Rohrleitung 2 mit Fluid wird in der Kammer 10 über die Kommunikationsöffnung 11 eine stehende Welle durch Anregung der Fluidsäule im Rohr 2 mit einer vorherbestimmten Frequenz ausgebildet. Die Kammerabmessungen werden so gewählt, dass die darin ausgebildete schwingende Fluidsäule eine Frequenz besitzt, welche über Interferenz bestimmte Eigenschwingungen im Rohrinneren auslöscht. Die Ausgestaltung des Volumens der Kammer 10 ist dem Fachmann geläufig und hängt vom Rohrdurchmesser, dem darin transportierten Fluid und der Grösse der Öffnungen 11 ab. In gleicher Weise wird bei Vorsehen einer zweiten Kammer 20 eine weitere Schwingungsfrequenz in derselben ausgelöst, welche eine andere Frequenz auslöschen kann.

Je nach Anforderung kann auch ein Schwingungsdämpfer mit mehreren Kammern unterschiedlicher Volumina, wie in Fig. 7 und 8 beispielhaft gezeigt, hergestellt werden, der dann mehrere Resonanzfrequenzen auslöschen kann.

Die Auswahl der Ausführungsform sowie der Verbindungstechnik hängt stark vom verwendeten Material, dem zu dämpfenden Fluid und den Abmessungen des Dämpfers ab. Als Verbindungstechnik für die Resonatorkomponenten eignet sich jegliche im technischen Gebiet übliche Technik - bei Metallrohren bietet sich bspw. Schweissen jeglicher Art, Falzen, Löten oder Kleben an. Selbstverständlich kann am erfindungsgemäßen Kammerresonator anstelle eines längeren ersten oder zweiten Rohrs 4, 5 auch nur ein kurzes Anschlußrohrstück für eine an- oder abführende Leitung vorgesehen werden.

Obwohl die Erfindung anhand bevorzugter Ausführungsbeispiele näher erläutert wurde, ist sie keineswegs auf dasselbe eingeschränkt sondern dem Fachmann ist offensichtlich, dass verschiedenste Ausführungen im Rahmen des Schutzumfangs der beiliegenden Ansprüche möglich sind.

### Bezugszeichenliste

- 2: Rohrleitung
- 3: erweiterter Bereich von 2 bzw. 5 oder 6
- 4: erstes Rohr
- 5: zweites Rohr
- 6: drittes Rohr
- 8: Flansch auf erstem Rohr
- 10: Kammer
- 11: Verbindungsöffnung in 4 der ersten Kammer 10
- 11': Verbindungsöffnung in 4 der zweiten Kammer 20
- 20: zweite Kammer

## Patentansprüche

1. Kammerresonator zur Dämpfung von Geräuschen in einer Rohrleitung (2), mit mindestens einer um die Rohrleitung (2) verlaufenden Kammer (10), die über mindestens eine Verbindungsöffnung (11, 22) zwischen Rohrleitungsinnerem und Kammer (10, 20) zum Druckausgleich dazwischen mit dem Rohrleitungsinneren verbunden ist; wobei die mindestens eine Kammer (10) gebildet ist durch den umgeformten Endabschnitt des ersten Rohrs (4) mit flanschartiger Erhebung (8) und einen in der Länge der Kammer(n) (10, 20) aufgeweiteten Endabschnitt des zweiten Rohrs (5);
wobei die mindestens eine flanschartige Erhebung (8) mindestens Kammerhöhe hat und der aufgeweitete Endabschnitt des zweiten Rohrs (5) einen Durchmesser entsprechend der Summe aus Rohrdurchmesser und Kammerhöhe besitzt, wobei die ineinandergeschobenen Endabschnitte des ersten und zweiten Rohrs (4,5) an ihren Berührungsstellen verbunden sind und mindestens eine Öffnung (11) im ersten Rohr (4) im Bereich der Kammer (10, 20) zur Kommunikation mit dem Rohrinneren besteht.

2. Resonator nach Anspruch 1, **dadurch gekennzeichnet, dass** das erste und zweite Rohr (4, 5) aus gleichem Material bestehen.

3. Resonator nach Anspruch 1, **dadurch gekennzeichnet, dass** das erste und zweite Rohr (4, 5) aus unterschiedlichem Material bestehen.

4. Resonator nach einem der Ansprüche 1 bis 2, **dadurch gekennzeichnet, dass** die flanschartige Erhebung (8) durch Schweißen, Falzen, Löten, Fügen, Kleben am zweiten Rohr (5) dichtend befestigt ist.

5. Resonator nach Anspruch 4, **dadurch gekennzeichnet, dass** die Befestigung ausgewählt ist aus der Gruppe: Falze, Schweißstellen, Lötstellen, Schrauben, Nieten.

6. Resonator nach einem der Ansprüche 1 bis 5, **dadurch gekennzeichnet, dass** die mindestens eine Öffnung (11) ein Schlitz im ersten Rohr (4) ist.

7. Resonator nach einem der vorangehenden Ansprüche, **dadurch gekennzeichnet, dass** er zumindest teilweise aus Metall, wie Aluminiumblech, Stahlblech gebildet ist.

8. Resonator nach einem der vorangehenden Ansprüche, **dadurch gekennzeichnet, daß** ein drittes Rohr (6) mit einem erweiterten Endabschnitt über den ersten Rohrabschnitt (4) an der dem zweiten Rohr entgegengesetzten Seite der flanschartigen Erhebung (8) geschoben und am ersten Rohrabschnitt (4) befestigt ist.

9. Verfahren zur Herstellung eines Kammerresonators nach einem der vorangehenden Ansprüche, mit:
Ausbilden einer Erweiterung am Endbereich eines Rohrs mit einem Durchmesser entsprechend der Summe aus der doppelten Kammerhöhe und dem Rohrdurchmesser;
Herstellen mindestens einer flanschartigen Erhebung in Kammerhöhe und in einer der Kammerlänge entsprechenden Distanz vom Ende eines ersten Rohrs mit Rohrleitungsdurchmesser durch ein an sich bekanntes Verfahren;
Herstellen mindestens einer Kommunikationsöffnung am Endabschnitt des ersten Rohrs im Bereich der Kammer;
Zusammenschieben der Rohrenden, wobei das zweite Rohr die Resonatoraußenwand und das erste Rohr die Resonatorinnenwand liefert, und
Verbinden der Berührungsstellen beider Rohre.

10. Verfahren nach Anspruch 9, **dadurch gekennzeichnet, dass** die mindestens eine flanschartige Erhebung am ersten Rohr durch Stauchen hergestellt wird.

11. Verfahren nach Anspruch 9, **dadurch gekennzeichnet, dass** die mindestens eine flanschartige Erhebung am ersten Rohr durch IHU hergestellt wird.

12. Verfahren nach Anspruch 9 oder 10, **dadurch gekennzeichnet, daß** mindestens eine weitere Resonanzkammer durch Ausbilden einer Kommunikationsöffnung in der Rohrleitung und Aufschieben eines erweiterten Rohrendbereichs auf die Rohrleitung mit Kommunikationsöffnung hergestellt wird.

13. Verfahren nach Anspruch 9 bis 12, **dadurch gekennzeichnet, dass** das Verbinden des ersten und zweiten Rohrs durchgeführt wird durch: Schweißen, Löten, Schrauben, Nieten, Falzen.
